# EUROPÄISCHE PATENTSCHRIFT

(11) **EP 3 355 147 B1**
(45) Veröffentlichungstag und Bekanntmachung des Hinweises auf die Patenterteilung: **08.05.2024**
(21) Anmeldenummer: 17207706.7
(22) Anmeldetag: 15.12.2017
(51) Int. Cl.: G05D 1/00, G05D 1/02

(54) **VERFAHREN ZUM BETRIEB EINES SICH SELBSTTÄTIG FORTBEWEGENDEN FAHRZEUGS**
METHOD FOR OPERATING AN AUTOMATICALLY MOVING VEHICLE
PROCÉDÉ DE FONCTIONNEMENT D'UN VÉHICULE EN MOUVEMENT DE MANIÈRE AUTOMATIQUE

(30) Priorität: 22.12.2016 DE 102016125319
(43) Veröffentlichungstag der Anmeldung: 01.08.2018
(73) Patentinhaber: Vorwerk & Co. Interholding GmbH, 42275 Wuppertal (DE)
(72) Erfinder: Schönhoff, Helmut, 42897 Remscheid (DE); Jentsch, Jochen, 13505 Berlin (DE); Schmidt, Dirk, 51688 Wipperfürth (DE); Schweppe, Sabine, 40789 Monheim (DE); Windorfer, Harald, 40822 Mettmann (DE); Blum, Michael, 42289 Wuppertal (DE); Hahn, Pia, 58332 Schwelm (DE); Zabback, Iris, 42289 Wuppertal (DE); Arnold, Hans-Peter, 58566 Kierspe (DE); Liß, Raphael, 53225 Bonn (DE); Brede, Maike, 58454 Witten (DE)
(74) Vertreter: Müller, Enno

(56) Entgegenhaltungen:
- WO-A1-2014/043732
- WO-A2-03/093765
- DE-A1-102015 105 211
- US-A1- 2016 135 655
- US-A1- 2016 260 328
- US-B1- 9 429 947

## Beschreibung

### Gebiet der Technik

Die Erfindung betrifft ein Verfahren zum Betrieb eines sich selbsttätig innerhalb einer Umgebung fortbewegenden Fahrzeugs, insbesondere eines Reinigungsroboters, wobei das Fahrzeug während einer Fortbewegung innerhalb der Umgebung Umgebungsdaten zu Hindernissen detektiert, wobei das Fahrzeug seine aktuelle Position und Orientierung innerhalb der Umgebung anhand eines Vergleichs der detektierten Umgebungsdaten mit Kartendaten einer Umgebungskarte erkennt und sich anhand der Umgebungskarte innerhalb der Umgebung fortbewegt, wobei die Umgebungskarte auf einem Display des Fahrzeugs dargestellt wird.

Des Weiteren betrifft die Erfindung ein sich selbsttätig innerhalb einer Umgebung fortbewegendes Fahrzeug, insbesondere einen Reinigungsroboter, wobei das Fahrzeug eine Detektionseinrichtung zur Detektion von Umgebungsdaten zu Hindernissen innerhalb der Umgebung aufweist, und wobei das Fahrzeug eine Navigationseinrichtung aufweist, welche eingerichtet ist, eine aktuelle Position und Orientierung des Fahrzeugs innerhalb der Umgebung anhand eines Vergleichs der detektierten Umgebungsdaten mit Kartendaten einer Umgebungskarte zu erkennen und sich anhand der Umgebungskarte innerhalb der Umgebung fortzubewegen, und wobei das Fahrzeug ein Display zur Darstellung der Umgebungskarte aufweist.

### Stand der Technik

Sich selbsttätig fortbewegende Fahrzeuge sind im Stand der Technik bekannt. Ein als Reinigungsroboter ausgebildetes derartiges Fahrzeug zeigt beispielsweise die Druckschrift DE 10 2012 109 004 A1. Beschrieben ist dort ein Reinigungsroboter mit einer Mensch-Maschine-Schnittstelle, welche ein an einem Gehäuse des Reinigungsroboters ausgebildetes Display aufweisen kann. Auf diesem Display können Informationen über einen Bearbeitungsvorgang des Reinigungsroboters dargestellt werden, unter anderem auch Informationen betreffend eine Reinigungsumgebung, beispielsweise in Form einer Umgebungskarte.

Des Weiteren ist es unter anderem beispielsweise auch aus den Druckschriften DE 10 2008 014 912 A1 und DE 10 2011 000 250 A1 bekannt, sich selbsttätig fortbewegende Fahrzeuge wie Reinigungsroboter mit einer Detektionseinrichtung auszustatten, welche beispielsweise ein optisches Triangulationssystem mit einer Lichtquelle und einer Empfängereinheit aufweist. Beim Befahren eines Teilbereiches der Umgebung, beispielsweise eines Raumes einer Wohnung, misst die Detektionseinrichtung Entfernungen zu Hindernissen, welche als Grundlage für die Erstellung einer Umgebungskarte dienen. Abhängig von einem gemessenen Abstand zu einem Hindernis kann das Fahrzeug durch angemessene Rangier- und Ausweichbewegungen reagieren, um nicht mit den Hindernissen zu kollidieren. Ein weiteres Beispiel eines Reinigungsroboters welche Hindernisse detektiert und umgeht ist aus der WO 2016/133320 A1 bekannt.

Neben Triangulationssystemen sind im Stand der Technik weitere Detektionseinrichtungen zur Detektion von Hindernissen bekannt, beispielsweise Ultraschallsensoren, Kontaktsensoren, Kamerasysteme und dergleichen. Es ist des Weiteren bekannt, einen Verfahrweg eines Fahrzeugs mittels Odometrie-Sensoren zu messen, so dass eine gefahrene Strecke und Richtung ermittelt werden kann.

Sofern das Fahrzeug, insbesondere der Reinigungsroboter, dabei ein Display zur Anzeige der Umgebungskarte aufweist, besteht das Problem, dass sich der Nutzer - je nach der aktuellen Orientierung des Fahrzeugs innerhalb der Umgebung - in die Darstellung der Umgebungskarte hineindenken muss, um die dargestellte Umgebung gedanklich in Übereinstimmung mit der tatsächlichen räumlichen Orientierung der Umgebung zu bringen. Dies ist für den Nutzer des Fahrzeugs unkomfortabel und kann zu Fehlern bei einer manuellen Steuerung einer Fortbewegung des Fahrzeugs führen.

### Zusammenfassung der Erfindung

Es ist daher Aufgabe der Erfindung, ein Verfahren zum Betrieb eines sich selbsttätig fortbewegenden Fahrzeugs bzw. ein solches sich selbsttätig fortbewegendes Fahrzeug zu schaffen, bei welchem die Darstellung der Umgebungskarte so optimiert ist, dass sich ein Nutzer auch bei Richtungsänderungen des Fahrzeugs besonders einfach und schnell darin orientieren kann.

Zur Lösung der vorgenannten Aufgabe wird zunächst ein Verfahren zum Betrieb eines sich selbsttätig innerhalb einer Umgebung fortbewegenden Fahrzeugs vorgeschlagen, bei welchem die Umgebungskarte auf dem während einer Fortbewegung des Fahrzeugs in Bezug auf seine Darstellungsebene im Wesentlichen horizontal ausgerichteten Display des Fahrzeugs dargestellt wird, und wobei die Orientierung der Umgebungskarte in Abhängigkeit von einer erkannten Orientierung des Fahrzeugs innerhalb der Umgebung variiert wird.

Gemäß dieser erfindungsgemäßen Ausgestaltung weist die auf dem Display dargestellte Umgebungskarte keine relativ zu dem Display bzw. Gehäuse des Fahrzeugs konstante Orientierung auf. Stattdessen variiert die Orientierung der dargestellten Umgebungskarte mit der aktuellen Orientierung des Fahrzeugs innerhalb der Umgebung, d. h. beispielsweise einer aktuellen Fortbewegungsrichtung des Fahrzeugs. Sofern das Fahrzeug seine Fortbewegungsrichtung ändert, wird gleichzeitig auch die Orientierung der auf dem Fahrzeug dargestellten Umgebungskarte geändert, so dass der Nutzer sich nicht neu in die Umgebungskarte hineindenken muss. Darüber hinaus ist die Darstellungsebene des Displays und somit auch die Umgebungskarte im Wesentlichen horizontal und/oder parallel zu einer Bodenfläche ausgerichtet, auf welcher sich das Fahrzeug fortbewegt. Dabei bezieht sich die horizontale Ausrichtung auf eine ebenfalls horizontale Orientierung des Fahrzeugs bzw. dessen globaler Fahrtrichtung. Sofern sich das Fahrzeug hingegen auf einer ansteigenden oder abfallenden Fläche befindet, beispielsweise bei Bodenunebenheiten, folgt selbstverständlich auch die Darstellungsebene diesem Anstieg bzw. Abfall. Ein Nutzer des Fahrzeugs, welcher von oben auf das Fahrzeug schaut, kann die in der Umgebungskarte dargestellte Umgebung somit auf besonders einfache Art und Weise wiedererkennen und sich darin orientieren. Um die durchzuführende Änderung der Orientierung der Darstellung zu ermitteln, werden aus von einer Detektionseinrichtung des Fahrzeugs aufgenommenen Umgebungsdaten, beispielsweise Daten eines Laserdistanzsensors, Odometrie-Sensors und dergleichen, eine momentane Position und Orientierung des Fahrzeugs in der Umgebung ermittelt und für die Orientierung der dargestellten Umgebungskarte verwendet.

Insbesondere wird vorgeschlagen, dass die Umgebungskarte stets so dargestellt wird, dass die Orientierung der dargestellten Umgebungskarte der räumlichen Orientierung der Umgebung entspricht. Bei jeder Richtungsänderung des Fahrzeugs wird die grafische Darstellung der Umgebung so korrigiert, dass die Orientierung der Darstellung immer der räumlichen Orientierung der Umgebung entspricht. Egal von welcher Raumrichtung aus der Nutzer somit auf das auf dem Fahrzeug angeordnete Display blickt, bleibt die in der Umgebungskarte angezeigte Raumrichtung immer die tatsächliche Raumrichtung, in welche der Nutzer gleichzeitig auch in die Umgebung blickt. Die auf dem Display dargestellte Umgebungskarte ist somit ein kleineres Abbild der tatsächlichen Umgebung und entspricht in Bezug auf die dargestellten Raumrichtungen der Wirklichkeit. Die Lokalisierung des Fahrzeugs bzw. auch des Nutzers innerhalb der Umgebung ist somit besonders leicht durchzuführen. Sofern der Nutzer beispielsweise bezogen auf einen Blick auf den oberen Bildrand der Darstellungsebene eine Zimmertür erblickt, liegt diese Zimmertür in der Umgebung auch tatsächlich vor ihm. Der Anwendungskomfort für den Nutzer ist somit besonders hoch.

Des Weiteren wird vorgeschlagen, dass eine aktuelle Position des Fahrzeugs in der Umgebungskarte dargestellt wird. Diese Maßnahme vereinfacht die Orientierung des Nutzers innerhalb der Umgebungskarte zusätzlich. Der Nutzer erhält somit eine Information, wo genau sich das Fahrzeug innerhalb der Umgebung befindet. Zusätzlich erhält er ebenfalls eine Information darüber, wo er, d. h. der Nutzer, sich selbst innerhalb der Umgebung befindet, da das Fahrzeug zwangsläufig in seiner Sichtweite ist. Die Position des Fahrzeugs kann durch ein besonderes Symbol, eine Fahne, ein Modell des Fahrzeugs oder dergleichen dargestellt werden. Falls es sich bei dem Modell beispielsweise um eine Draufsicht des Fahrzeugs handelt, empfiehlt es sich, dass auch die Draufsicht eine Orientierung aufweist, welche der tatsächlichen räumlichen Orientierung des Fahrzeugs entspricht.

Es kann vorgesehen sein, dass das Fahrzeug eine Reinigungstätigkeit innerhalb der Umgebung ausführt. Gemäß dieser Ausgestaltung handelt es sich bei dem Fahrzeug beispielsweise um einen Reinigungsroboter, welcher als Saug- und/oder Wischroboter ausgebildet ist. Das Fahrzeug kann bereits während der Ausführung einer Reinigungstätigkeit und damit auch während einer damit verbundenen Fortbewegung Umgebungsdaten detektieren, welche zur Erstellung der Umgebungskarte dienen.

Des Weiteren kann in diesem Zusammenhang vorgesehen sein, dass ein aktueller Reinigungsstatus von zumindest Teilbereichen der Umgebung und/oder eine einen Reinigungsstatus betreffende Information zu einem Teilbereich der Umgebung innerhalb der Umgebungskarte angezeigt wird. Die Umgebung kann somit beispielsweise in Teilbereiche aufgeteilt dargestellt werden, wobei die Teilbereiche mit einer Information versehen werden, die angibt, ob und/oder wann der jeweilige Teilbereich bereits von dem Fahrzeug gereinigt wurde oder noch gereinigt werden muss bzw. gereinigt wird. Die in der Umgebungskarte vorhandenen Umgebungsdaten gehen somit über eine reine Darstellung einer Raum- und/oder Hindernisinformation hinaus. Der Nutzer kann somit besonders einfach zwischen Teilbereichen unterscheiden, welche entweder bereits gereinigt worden sind oder noch einer Reinigung bedürfen. Beispielsweise kann auch eine Information über einen Zeitpunkt enthalten sein, zu dem der jeweilige Teilbereich zuletzt gereinigt wurde bzw. das nächste Mal gereinigt wird. Des Weiteren können die den Reinigungsstatus betreffenden Informationen auch besondere Ereignisse beinhalten, beispielsweise einen Grund für eine fehlgeschlagene Reinigung, zum Beispiel wenn Möbel eine Zufahrt zu einem Teilbereich verhindern.

Es wird vorgeschlagen, dass eine Art einer in zumindest Teilbereichen der Umgebung durchzuführenden und/oder bereits durchgeführten Reinigungstätigkeit innerhalb der Umgebungskarte angezeigt wird. Durch diese Ausgestaltung werden in der Umgebungskarte somit verschiedene Reinigungsarten, beispielsweise Trockenreinigung, Feuchtreinigung und dergleichen, angezeigt, welche das Fahrzeug entweder bereits ausgeführt hat, oder welche noch durchzuführen sind. Dies empfiehlt sich insbesondere, wenn es sich bei dem Fahrzeug um ein kombiniertes Saug-Wisch-Gerät handelt.

Insbesondere wird vorgeschlagen, dass verschiedene Reinigungsstatus und/oder verschiedene Arten von Reinigungstätigkeiten mit unterschiedlichen Farben, Mustern und/oder Helligkeitsstufen innerhalb der Umgebungskarte angezeigt werden. Auch dies erleichtert dem Nutzer die Orientierung innerhalb der Umgebungskarte und die Identifizierung von Teilbereichen der Umgebung, welche gegebenenfalls noch einer Reinigung bedürfen.

Es wird vorgeschlagen, dass das Fahrzeug die Umgebungskarte aus den detektierten Umgebungsdaten erstellt. Das Fahrzeug erstellt sich somit selbst eine interne Umgebungskarte, welche durch eine fortgeführte Fortbewegung innerhalb der Umgebung immer mehr mit Umgebungsdaten erweitert wird. Zur Erstellung der Umgebungskarte aus den von der Detektionseinrichtung aufgenommenen Umgebungsdaten verfügt das Fahrzeug vorzugsweise über eine entsprechende Recheneinrichtung.

Alternativ kann auch vorgesehen sein, dass ein Nutzer des Fahrzeugs eine Umgebungskarte an das Fahrzeug übermittelt. In diesem Fall wird die Umgebungskarte nicht von dem Fahrzeug selbst erstellt, sondern von einem externen Gerät oder durch eine Nutzereingabe. Beispielsweise kann die Umgebungskarte auf einem externen Gerät wie beispielsweise einem Mobiltelefon, einem PC, einem Server oder dergleichen gespeichert sein und an das Fahrzeug übergeben werden. Während einer Fortbewegung greift das Fahrzeug auf diese vorerstellte Umgebungskarte zu und orientiert sich durch Vergleich der in der Umgebungskarte verzeichneten Umgebungsdaten mit aktuell von seiner Detektionseinrichtung gemessenen Umgebungsdaten.

Neben dem zuvor beschriebenen Verfahren wird mit der Erfindung ebenso ein sich selbsttätig innerhalb einer Umgebung fortbewegendes Fahrzeug, insbesondere ein Reinigungsroboter, vorgeschlagen, welches Fahrzeug eine Detektionseinrichtung zur Detektion von Umgebungsdaten zu Hindernissen innerhalb der Umgebung aufweist, und wobei das Fahrzeug eine Navigationseinrichtung aufweist, welche eingerichtet ist, eine aktuelle Position und Orientierung des Fahrzeugs innerhalb der Umgebung anhand eines Vergleichs der detektierten Umgebungsdaten mit Kartendaten einer Umgebungskarte zu erkennen und sich anhand der Umgebungskarte innerhalb der Umgebung fortzubewegen, wobei das Fahrzeug ein Display zur Darstellung der Umgebungskarte aufweist, wobei eine Displayebene des Displays bezogen auf eine Orientierung des Fahrzeugs während einer Fortbewegung im Wesentlichen horizontal ausgerichtet ist, und wobei das Fahrzeug eine Recheneinrichtung aufweist, welche eingerichtet ist, die Orientierung der Umgebungskarte auf dem Display in Abhängigkeit von einer erkannten Orientierung des Fahrzeugs innerhalb der Umgebung zu variieren.

Das zuvor vorgeschlagene Fahrzeug, insbesondere ein so ausgebildeter Reinigungsroboter, ist somit geeignet, das zuvor erläuterte Verfahren auszuführen und die auf seinem Display dargestellte Umgebungskarte stets so zu variieren, dass die Orientierung der dargestellten Umgebungskarte stets der räumlichen Orientierung der Umgebung entspricht.

### Kurze Beschreibung der Zeichnungen

Im Folgenden wird die Erfindung anhand von Ausführungsbeispielen näher erläutert. Es zeigen:
- Fig. 1: ein erfindungsgemäßes sich selbsttätig fortbewegendes Fahrzeug,
- Fig. 2: das Fahrzeug innerhalb einer Umgebung während einer Fortbewegung in eine erste Fortbewegungsrichtung,
- Fig. 3: eine vergrößerte Darstellung des Fahrzeugs gemäß Figur 2,
- Fig. 4: das Fahrzeug in der Umgebung während einer Fortbewegung in eine zweite Fortbewegungsrichtung,
- Fig. 5: eine vergrößerte Darstellung des Fahrzeugs gemäß Figur 4.

### Beschreibung der Ausführungsformen

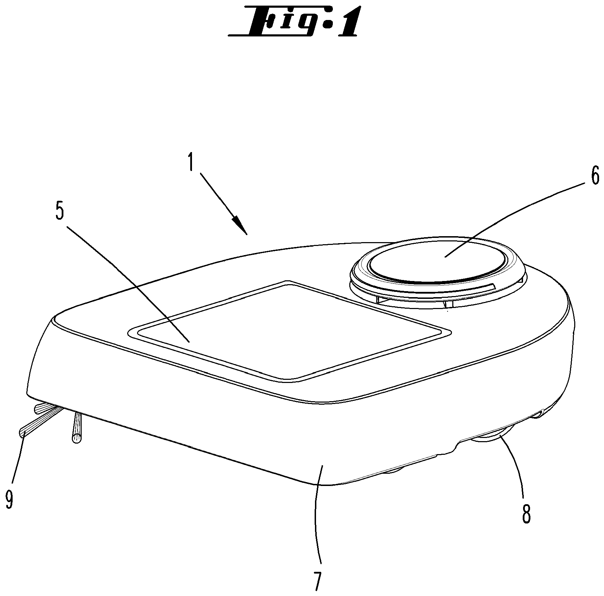

Figur 1 zeigt ein sich selbsttätig innerhalb einer Umgebung 2 fortbewegendes Fahrzeug 1, welches hier als Saugroboter ausgebildet ist. Das Fahrzeug 1 weist ein Gehäuse 7 auf, an dessen Oberseite ein Display 5 ausgebildet ist. Des Weiteren verfügt das Fahrzeug 1 über motorisch angetriebene Räder 8 zur Fortbewegung innerhalb der Umgebung 2 sowie über eine oder mehrere Bürsten 9 zur Ausführung einer Reinigungstätigkeit. Das Fahrzeug 1 verfügt des Weiteren über eine Detektionseinrichtung 6, welche hier als Triangulationsmesseinrichtung ausgebildet ist. Die Detektionseinrichtung 6 ist dabei so ausgebildet und eingerichtet, dass Messungen innerhalb einer Detektionsebene über einen Winkelbereich von 360 Grad, d. h. rundum das Fahrzeug 1, durchgeführt werden können. Die Detektionseinrichtung 6 funktioniert hier als Triangulationsmesseinrichtung so, dass der von einem Laser der Triangulationsmesseinrichtung emittierte Lichtstrahl durch eine Öffnung des Gehäuses 7 austritt und die Umgebung 2 des Fahrzeugs 1 über einen 360 Grad-Winkelbereich abscannt. Wenn der Lichtstrahl auf ein Hindernis 3 trifft, wird zumindest ein Anteil reflektiert und trifft auf einen Sensor der Detektionseinrichtung 6, beispielsweise einen CCD- oder CMOS-Chip. Abhängig von einem Abstand zwischen der Detektionseinrichtung 6 und dem den Lichtstrahl reflektierenden Hindernis 3 trifft der reflektierte Anteil an einer anderen Position auf den Chip auf. Anhand dieser Position kann die Entfernung des Hindernisses 3 zu dem Fahrzeug 1 bestimmt werden. Neben der Detektionseinrichtung 6 verfügt das Fahrzeug 1 über eine nicht dargestellte Odometrie-Messeinrichtung, welche den Rädern 8 zugeordnet ist und eine zurückgelegte Strecke sowie eine Verfahrrichtung misst. Das Fahrzeug 1 weist einen internen Speicher sowie eine Recheneinrichtung auf, mittels welcher eine Umgebungskarte 4 der Umgebung 2 des Fahrzeugs 1 erstellt werden kann. Anhand dieser Umgebungskarte 4 kann sich das Fahrzeug 1 innerhalb der Umgebung 2 orientieren und einen Fortbewegungspfad beispielsweise für eine gezielte Bodenreinigung in einer Wohnung planen. Zur Erstellung der Umgebungskarte 4 werden die von der Odometrie-Messeinrichtung aufgenommenen Messdaten mit den Umgebungsdaten der Detektionseinrichtung 6 verglichen. Die erstellte Umgebungskarte 4 wird einem Nutzer des Fahrzeugs 1 auf dem Display 5 des Fahrzeugs 1 angezeigt.

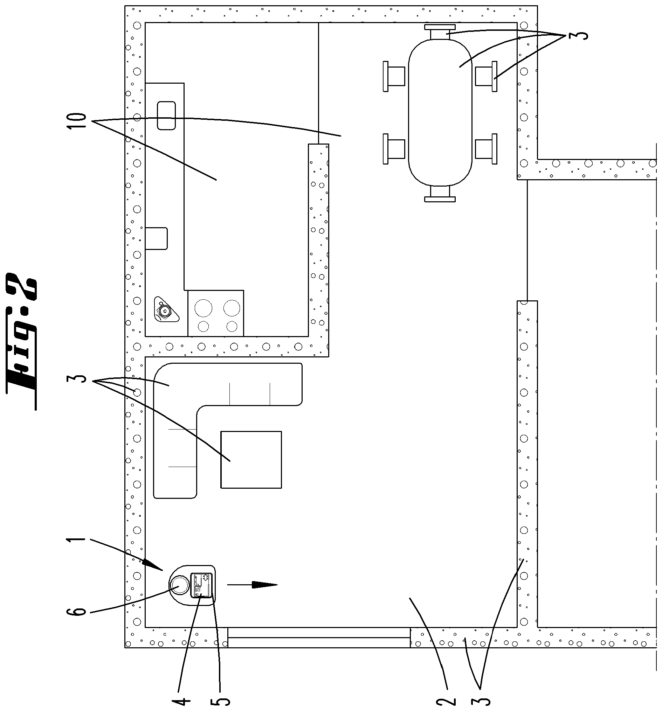

Figur 2 zeigt ein Beispiel einer Umgebung 2, nämlich hier einen Teil einer Wohnung mit mehreren Räumen 10. In den Räumen 10 sind unterschiedliche Hindernisse 3 vorhanden, nämlich zum einen Möbelstücke wie beispielsweise Sitzgruppen, Schränke, Küchenmöbel, und zum anderen Raumbegrenzungen wie Wände, Türen, bodentiefe Fenster usw. In der Darstellung gemäß Figur 2 bewegt sich das Fahrzeug 1 bezogen auf die Blattebene in eine Richtung (Pfeil) zum unteren Blattrand. Dabei ist die auf dem Display 5 angezeigte Umgebungskarte 4 so orientiert, dass die räumliche Anordnung der in der Umgebungskarte 4 dargestellten Räume 10 und Hindernisse 3 der tatsächlichen Umgebungssituation entspricht, d. h. der bezogen auf die Blattebene oben rechts angeordnete Raum 10 wird auch in der Umgebungskarte 4 oben rechts angezeigt, so dass sich ein Nutzer, welcher neben dem Fahrzeug 1 steht, besonders einfach und komfortabel in der Umgebungskarte 4 orientieren kann und unmittelbar die Position und Orientierung der Räume 10 und Hindernisse 3 erkennt, ohne eine weitere gedankliche Leistung aufwenden zu müssen.

Die Recheneinrichtung des Fahrzeugs 1 vergleicht die in der Umgebungskarte 4 eingetragenen Räume 10 und Hindernisse 3 mit aktuell von der Detektionseinrichtung 6 gemessenen Räumen 10 und Hindernissen 3. Bei Übereinstimmung der Umgebungsdaten kann die Recheneinrichtung einen Rückschluss auf die aktuelle Position und Orientierung des Fahrzeugs 1 innerhalb der Umgebung 2 ziehen. Die auf dem Display 5 dargestellte Umgebungskarte 4 wird dann so gedreht, dass die Orientierung der dargestellten Umgebungskarte 4 jeweils der räumlichen Orientierung der Umgebung 2 entspricht. Zusätzlich können innerhalb der Umgebungskarte 4 auch noch Informationen dargestellt werden, welche sich nicht alleine auf eine geometrische Anordnung der Räume 10 und Hindernisse 3 der Umgebung 2 beziehen. Beispielsweise kann zu einzelnen Räumen 10 ein Reinigungsstatus angegeben werden, wie beispielsweise "noch nicht gereinigt" bzw. "bereits gereinigt". Des Weiteren können auch Informationen enthalten sein, welche eine Art einer bereits durchgeführten oder noch durchzuführenden Reinigungstätigkeit angeben, beispielsweise eine "Feuchtreinigung" oder "Trockenreinigung". Des Weiteren kann ein Zeitpunkt angegeben sein, wann der Raum 10 gereinigt wurde und/ oder noch gereinigt wird, eine Information darüber, dass und/oder warum eine Reinigung nicht durchgeführt werden konnte (zum Beispiel bei Existenz von Hindernissen 3). Diese Informationen können in der Form von unterschiedlichen Farben, Mustern, Helligkeitsstufen und dergleichen angezeigt werden. Des Weiteren wird hier auch die aktuelle Position und Orientierung des Fahrzeugs 1 in der Umgebungskarte 4 dargestellt. Die Darstellung erfolgt nach der Art eines Symbols, welches das Fahrzeug 1 in einer Draufsicht darstellt. Für einen zusätzlichen Orientierungskomfort kann dieses Symbol beispielsweise blinken oder in einer auffälligen Farbe dargestellt sein.

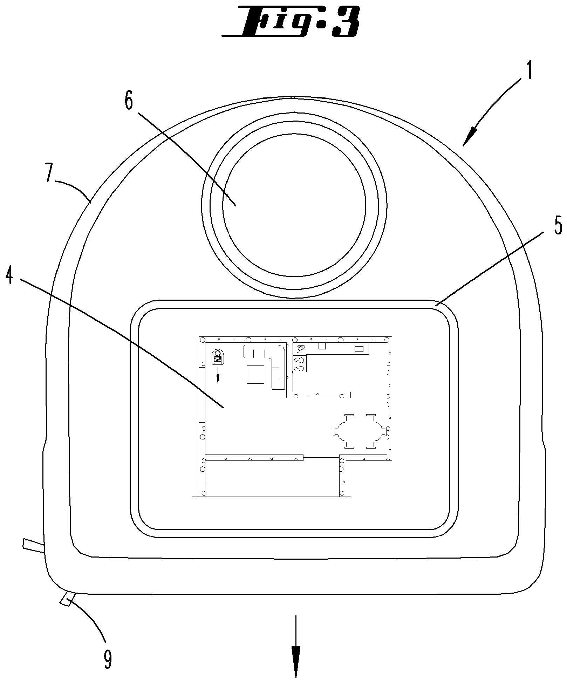

Figur 3 zeigt eine vergrößerte Darstellung des Fahrzeugs 1 gemäß Figur 2. Zu erkennen ist dabei die aktuelle Fortbewegungsrichtung (Pfeil) des Fahrzeugs 1 und die passend zu der tatsächlichen Orientierung der Räume 10 und Hindernisse 3 dargestellte Umgebungskarte 4.

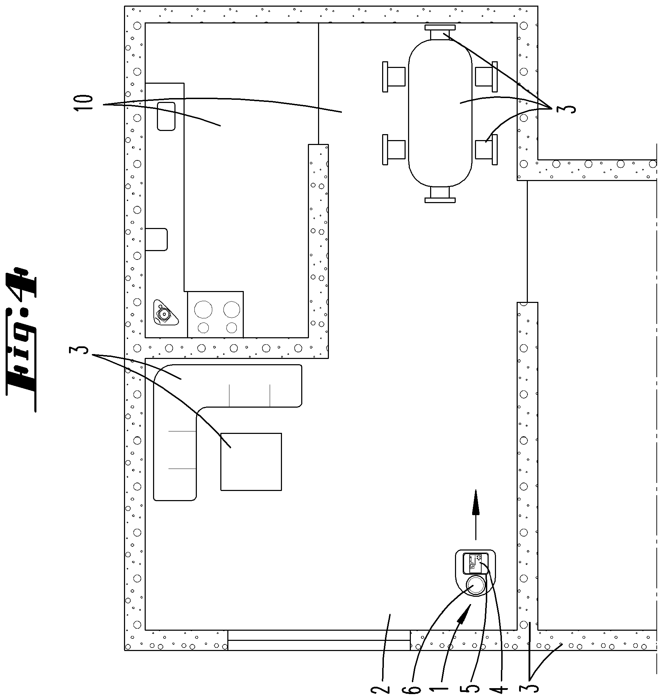

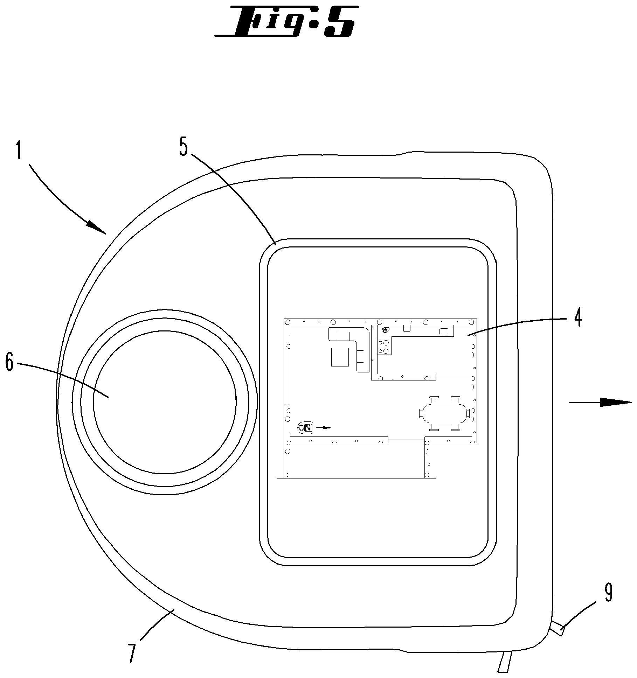

Die Figuren 4 und 5 zeigen das Fahrzeug 1 nachdem dieses seine Fortbewegungsrichtung (Pfeil) geändert hat. Wie in Figur 4 dargestellt, bewegt sich das Fahrzeug 1 nun in eine Richtung, welche gegenüber der Fortbewegungsrichtung der Figuren 2 und 3 um 90 Grad gegen den Uhrzeigersinn gedreht ist. Durch einen Vergleich der nun aktuell von der Detektionseinrichtung 6 aufgenommenen Umgebungsdaten mit der Umgebungskarte 4 erkennt die Recheneinrichtung des Fahrzeugs 1, dass das Fahrzeug 1 seine Position und Orientierung geändert hat und sich nun in eine andere Richtung fortbewegt. Die Recheneinrichtung errechnet, dass die auf dem Display 5 dargestellte Umgebungskarte 4- bezogen auf das Display 5 - um 90 Grad im Uhrzeigersinn gedreht werden muss, damit die in der Umgebungskarte 4 dargestellte Orientierung der Räume 10 und Hindernisse 3 weiterhin der tatsächlichen räumlichen Orientierung der Umgebung 2 entspricht.

Insgesamt erhält der Nutzer auf dem Display 5 somit stets eine Information über die tatsächliche Orientierung der Umgebung 2 des Fahrzeugs 1. Das Ablesen der Umgebungskarte 4 ist somit besonders komfortabel und einfach möglich.

### Liste der Bezugszeichen

- 1: Fahrzeug
- 2: Umgebung
- 3: Hindernis
- 4: Umgebungskarte
- 5: Display
- 6: Detektionseinrichtung
- 7: Gehäuse
- 8: Rad
- 9: Bürste
- 10: Raum

## Patentansprüche

1. Verfahren zum Betrieb eines sich selbsttätig innerhalb einer Umgebung (2) fortbewegenden Fahrzeugs (1), insbesondere eines Reinigungsroboters, wobei das Fahrzeug (1) während einer Fortbewegung innerhalb der Umgebung (2) Umgebungsdaten zu Hindernissen (3) detektiert, wobei das Fahrzeug (1) seine aktuelle Position und Orientierung innerhalb der Umgebung (2) anhand eines Vergleichs der detektierten Umgebungsdaten mit Kartendaten einer Umgebungskarte (4) erkennt und sich anhand der Umgebungskarte (4) innerhalb der Umgebung (2) fortbewegt, wobei die Umgebungskarte (4) auf einem Display (5) des Fahrzeugs (1) dargestellt wird, das dass die Umgebungskarte (4) auf dem während einer Fortbewegung des Fahrzeugs (1) in Bezug auf seine Darstellungsebene im Wesentlichen horizontal ausgerichteten Display (5) des Fahrzeugs (1) dargestellt wird, **dadurch gekennzeichnet, dass** die Orientierung der Umgebungskarte (4) in Abhängigkeit von einer erkannten Orientierung des Fahrzeugs (1) innerhalb der Umgebung (2) variiert wird, wobei die Umgebungskarte (4) stets so dargestellt wird, dass die Orientierung der dargestellten Umgebungskarte (4) der räumlichen Orientierung der Umgebung (2) entspricht, wobei die Orientierung der Umgebungskarte (4) relativ zu dem Display (5) mit der aktuellen Fortbewegungsrichtung des Fahrzeugs (1) variiert und die Orientierung der auf dem Display (5) des Fahrzeugs (1) dargestellten Umgebungskarte (4) geändert wird, sofern das Fahrzeug (1) seine Fortbewegungsrichtung ändert, und wobei die auf dem Display (5) dargestellte Umgebungskarte (4) ein kleineres Abbild der tatsächlichen Umgebung (2) ist und in Bezug auf die dargestellten Raumrichtungen der Wirklichkeit entspricht.

2. Verfahren nach Anspruch 1, **dadurch gekennzeichnet, dass** eine aktuelle Position des Fahrzeugs (1) in der Umgebungskarte (4) dargestellt wird.

3. Verfahren nach einem der vorhergehenden Ansprüche, **dadurch gekennzeichnet, dass** das Fahrzeug (1) eine Reinigungstätigkeit innerhalb der Umgebung (2) ausführt.

4. Verfahren nach Anspruch 3, **dadurch gekennzeichnet, dass** ein aktueller Reinigungsstatus von zumindest Teilbereichen der Umgebung (2) und/oder eine einen Reinigungsstatus betreffende Information zu einem Teilbereich der Umgebung (2) innerhalb der Umgebungskarte (4) angezeigt wird.

5. Verfahren nach Anspruch 3 oder 4, **dadurch gekennzeichnet, dass** eine Art einer in zumindest Teilbereichen der Umgebung (2) durchzuführenden und/oder bereits durchgeführten Reinigungstätigkeit innerhalb der Umgebungskarte (4) angezeigt wird.

6. Verfahren nach einem der Ansprüche 3 bis 5, **dadurch gekennzeichnet, dass** verschiedene Reinigungsstatus und/oder verschiedene Arten von Reinigungstätigkeiten mit unterschiedlichen Farben, Mustern und/oder Helligkeitsstufen innerhalb der Umgebungskarte (4) angezeigt werden.

7. Verfahren nach einem der Ansprüche 1 bis 6, **dadurch gekennzeichnet, dass** das Fahrzeug (1) die Umgebungskarte (4) aus den detektierten Umgebungsdaten erstellt.

8. Verfahren nach einem der Ansprüche 1 bis 6, **dadurch gekennzeichnet, dass** ein Nutzer des Fahrzeugs (1) eine Umgebungskarte (4) an das Fahrzeug (1) übermittelt.

9. Sich selbsttätig innerhalb einer Umgebung (2) fortbewegendes Fahrzeug (1), insbesondere Reinigungsroboter, wobei das Fahrzeug (1) eine Detektionseinrichtung (6) zur Detektion von Umgebungsdaten zu Hindernissen (3) innerhalb der Umgebung (2) aufweist, und wobei das Fahrzeug (1) eine Navigationseinrichtung aufweist, welche eingerichtet ist, eine aktuelle Position und Orientierung des Fahrzeugs (1) innerhalb der Umgebung (2) anhand eines Vergleichs der detektierten Umgebungsdaten mit Kartendaten einer Umgebungskarte (4) zu erkennen und sich anhand der Umgebungskarte (4) innerhalb der Umgebung fortzubewegen, und wobei das Fahrzeug (1) ein Display (5) zur Darstellung der Umgebungskarte (4) aufweist, das eine Displayebene des Displays (5) bezogen auf eine Orientierung des Fahrzeugs (1) während einer Fortbewegung im Wesentlichen horizontal ausgerichtet ist, **dadurch gekennzeichnet, dass** das Fahrzeug (1) eine Recheneinrichtung aufweist, welche eingerichtet ist, die Orientierung der Umgebungskarte (4) auf dem Display (5) in Abhängigkeit von einer erkannten Orientierung des Fahrzeugs (1) innerhalb der Umgebung (2) zu variieren, wobei die Umgebungskarte (4) stets so dargestellt wird, dass die Orientierung der dargestellten Umgebungskarte (4) der räumlichen Orientierung der Umgebung (2) entspricht, wobei die Orientierung der Umgebungskarte (4) relativ zu dem Display (5) mit der aktuellen Fortbewegungsrichtung des Fahrzeugs (1) variiert und die Orientierung der auf dem Display (5) des Fahrzeugs (1) dargestellten Umgebungskarte (4) geändert wird, sofern das Fahrzeug (1) seine Fortbewegungsrichtung ändert, und wobei die auf dem Display (5) dargestellte Umgebungskarte (4) ein kleineres Abbild der tatsächlichen Umgebung (2) ist und in Bezug auf die dargestellten Raumrichtungen der Wirklichkeit entspricht.

## Claims

1. Method for operating a vehicle (1) which moves automatically within an environment (2), in particular a cleaning robot, wherein the vehicle (1) detects environment data relating to obstacles (3) during a movement within the environment (2), wherein the vehicle (1) recognizes its current position and orientation within the environment (2) by means of a comparison of the detected environment data with map data of an environment map (4) and moves within the environment (2) by means of the environment map (4), wherein the environment map (4) is shown on a display (5) of the vehicle (1), the environment map (4) being shown on the display (5) of the vehicle (1) which is oriented substantially horizontally with respect to its display plane during a movement of the vehicle (1), **characterized in that** the orientation of the map of the surroundings (4) is varied as a function of a detected orientation of the vehicle (1) within the environment (2), the environment map (4) always being displayed in such a way that the orientation of the displayed map of the surroundings (4) corresponds to the spatial orientation of the environment (2), wherein the orientation of the environment map (4) relative to the display (5) varies with the current direction of travel of the vehicle (1) and the orientation of the environment map (4) shown on the display (5) of the vehicle (1) is changed if the vehicle (1) changes its direction of travel, and wherein the environment map (4) shown on the display (5) is a smaller image of the actual environment (2) and corresponds to reality in relation to the spatial directions shown.

2. Method according to claim 1, **characterized in that** a current position of the vehicle (1) is displayed in the environment map (4).

3. Method according to one of the preceding claims, **characterized in that** the vehicle (1) performs a cleaning activity within the environment (2).

4. Method according to claim 3, **characterized in that** a current cleaning status of at least partial areas of the environment (2) and/or information relating to a cleaning status for a partial area of the environment (2) is displayed within the environment map (4).

5. Method according to claim 3 or 4, **characterized in that** a type of cleaning activity to be carried out and/or already carried out in at least partial areas of the environment (2) is displayed within the environment map (4).

6. Method according to any one of claims 3 to 5, **characterized in that** different cleaning statuses and/or different types of cleaning activities are displayed with different colors, patterns and/or brightness levels within the environment map (4).

7. Method according to one of claims 1 to 6, **characterized in that** the vehicle (1) creates the environment map (4) from the detected environment data.

8. Method according to one of claims 1 to 6, **characterized in that** a user of the vehicle (1) transmits the environment map (4) of the surroundings to the vehicle (1).

9. Vehicle (1) moving automatically within an environment (2), in particular a cleaning robot, wherein the vehicle (1) has a detection device (6) for detecting environmental data relating to obstacles (3) within the environment (2), and wherein the vehicle (1) has a navigation device which is set up to recognizing a current position and orientation of the vehicle (1) within the environment (2) on the basis of a comparison of the detected environment data with map data of an environment map (4) and moving within the environment on the basis of the environment map (4), and wherein the vehicle (1) has a display (5) for displaying the environment map (4), which has a display plane of the display (5) in relation to an orientation of the vehicle (1) during a movement substantially as a function of the position of the vehicle (1) within the environment (2) is aligned horizontally, **characterized in that** the vehicle (1) has a computing device which is set up to vary the orientation of the environment map (4) on the display (5) as a function of a detected orientation of the vehicle (1) within the environment (2), the environment map (4) always being displayed in such a way that the orientation of the displayed environment map (4) corresponds to the spatial orientation of the environment (2), wherein the orientation of the environment map (4) relative to the display (5) varies with the current direction of travel of the vehicle (1) and the orientation of the environment map (4) shown on the display (5) of the vehicle (1) is changed if the vehicle (1) changes its direction of travel, and wherein the environment map (4) shown on the display (5) is a smaller image of the actual environment (2) and corresponds to reality in relation to the spatial directions shown.

## Revendications

1. Procédé de fonctionnement d'un véhicule (1) se déplaçant automatiquement dans un environnement (2), en particulier d'un robot de nettoyage, le véhicule (1) détectant, pendant un déplacement dans l'environnement (2), des données d'environnement relatives à des obstacles (3), le véhicule (1) reconnaissant sa position et son orientation actuelles dans l'environnement (2) à l'aide d'une comparaison des données d'environnement détectées avec des données cartographiques d'une carte d'environnement (4) et se déplaçant dans l'environnement (2) à l'aide de la carte d'environnement (4), la carte d'environnement (4) étant représentée sur un écran (5) du véhicule (1), la carte d'environnement (4) étant représentée sur l'écran (5) du véhicule (1) orienté sensiblement horizontalement par rapport à son plan de représentation pendant un déplacement du véhicule (1), **caractérisé en ce que** l'orientation de la carte d'environnement (4) est modifiée en fonction d'une orientation détectée du véhicule (1) à l'intérieur de l'environnement (2), la carte d'environnement (4) étant toujours représentée de telle sorte que l'orientation de la carte d'environnement (4) représentée correspond à l'orientation spatiale de l'environnement (2), l'orientation de la carte d'environnement (4) par rapport à l'écran (5) varie avec la direction de déplacement actuelle du véhicule (1) et l'orientation de la carte d'environnement (4) représentée sur l'écran (5) du véhicule (1) est modifiée dans la mesure où le véhicule (1) change sa direction de déplacement, et la carte d'environnement (4) représentée sur l'écran (5) est une image plus petite de l'environnement réel (2) et correspond à la réalité en ce qui concerne les directions spatiales représentées.

2. Procédé selon la revendication 1, **caractérisé en ce qu'**une position actuelle du véhicule (1) est représentée sur la carte d'environnement (4).

3. Procédé selon l'une des revendications précédentes, **caractérisé en ce que** le véhicule (1) effectue une opération de nettoyage à l'intérieur de l'environnement (2).

4. Procédé selon la revendication 3, **caractérisé en ce qu'**un état de nettoyage actuel d'au moins des zones partielles de l'environnement (2) et/ou une information concernant un état de nettoyage pour une zone partielle de l'environnement (2) sont affichés à l'intérieur de la carte d'environnement (4).

5. Procédé selon la revendication 3 ou 4, **caractérisé en ce qu'**un type d'activité de nettoyage à effectuer et/ou déjà effectué dans au moins des zones partielles de l'environnement (2) est indiqué à l'intérieur de la carte de l'environnement (4).

6. Procédé selon l'une quelconque des revendications 3 à 5, **caractérisé en ce que** différents états de nettoyage et/ou différents types d'activités de nettoyage sont affichés avec différentes couleurs, motifs et/ou niveaux de luminosité à l'intérieur de la carte d'environnement (4).

7. Procédé selon l'une des revendications 1 à 6, **caractérisé en ce que** le véhicule (1) établit la carte d'environnement (4) à partir des données d'environnement détectées.

8. Procédé selon l'une des revendications 1 à 6, **caractérisé en ce qu'**un utilisateur du véhicule (1) transmet une carte d'environnement (4).au véhicule (1).

9. Véhicule (1) se déplaçant automatiquement à l'intérieur d'un environnement (2), en particulier robot de nettoyage, le véhicule (1) présentant un dispositif de détection (6) pour la détection de données d'environnement relatives à des obstacles (3) à l'intérieur de l'environnement (2), et le véhicule (1) présentant un dispositif de navigation qui est conçu, de reconnaître une position et une orientation actuelles du véhicule (1) à l'intérieur de l'environnement (2) à l'aide d'une comparaison des données d'environnement détectées avec des données cartographiques d'une carte d'environnement (4) et de se déplacer à l'aide de la carte d'environnement (4) à l'intérieur de l'environnement, et le véhicule (1) présentant un écran (5) pour la représentation de la carte d'environnement (4), qui affiche un plan d'affichage de l'écran (5) par rapport à une orientation du véhicule (1) pendant un déplacement essentiellement dans le sens de la marche **caractérisé en ce que** le véhicule (1) présente un dispositif de calcul qui est conçu pour faire varier l'orientation de la carte d'environnement (4) sur l'écran (5) en fonction d'une orientation détectée du véhicule (1) à l'intérieur de l'environnement (2), la carte d'environnement (4) étant toujours représentée de telle sorte que l'orientation de la carte d'environnement (4) représentée correspond à l'orientation spatiale de l'environnement (2), l'orientation de la carte d'environnement (4) par rapport à l'écran (5) varie avec la direction de déplacement actuelle du véhicule (1) et l'orientation de la carte d'environnement (4) représentée sur l'écran (5) du véhicule (1) est modifiée dans la mesure où le véhicule (1) change sa direction de déplacement, et la carte d'environnement (4) représentée sur l'écran (5) est une image plus petite de l'environnement réel (2) et correspond à la réalité en ce qui concerne les directions spatiales représentées.
